# EUROPÄISCHE PATENTSCHRIFT

(11) **EP 1 055 349 B1**
(45) Veröffentlichungstag und Bekanntmachung des Hinweises auf die Patenterteilung: **14.03.2007**
(21) Anmeldenummer: 99904694.9
(22) Anmeldetag: 04.01.1999
(51) Int. Cl.: H04Q 11/04

(54) **VERFAHREN UND VORRICHTUNG ZUR ISDN-KOMMUNIKATION**
ISDN COMMUNICATION PROCESS AND DEVICE
PROCEDE ET DISPOSITIF POUR COMMUNICATION ISDN

(30) Priorität: 11.02.1998 DE 19805555
(43) Veröffentlichungstag der Anmeldung: 29.11.2000
(73) Patentinhaber: Living Byte Software GmbH, 80935 München (DE)
(72) Erfinder: ZIRPEL, Michael, Hainbuchenstrasse 2, D-80935 München (DE)
(74) Vertreter: Betten & Resch
(86) Internationale Anmeldenummer: PCT/DE1999/000008
(87) Internationale Veröffentlichungsnummer: WO 1999/041935

(56) Entgegenhaltungen:
- EP-A- 0 503 207
- WO-A-98/51120
- GB-A- 2 302 746
- US-A- 5 541 930
- US-A- 5 657 452
- MARSHALL G: "ISDN INTERNET ACCESS" LAN MAGAZINE,1. Oktober 1995 (1995-10-01), Seiten 56-59, 61/62, 65, XP000764447 ISSN: 0968-6320

## Beschreibung

In der modernen Telekommunikation setzt sich der ISDN (Integrated Services Digital Network)-Standard immer mehr durch. Nicht nur für die Kommunikation über Telefon, sondern insbesondere für die Datenübertragung eignet sich der neue Standard hervorragend, da er eine größere Übertragungsgeschwindigkeit sowie eine bessere Datensicherheit bietet als die bisherigen zur Datenübertragung verwendeten Mechanismen.

Für Datenübertragung im ISDN-Netz werden verschiedene, standardisierte Protokolle benutzt (z.B. X.75 und ISO 8208 für den Dateitransfer nach dem Euro-File Transfer-Standard und den Fax-Versand nach ISDN Gruppe 4).

Den meisten verschiedenen ISDN-Protokollen ist gemeinsam, daß es sich um paketorientierte Protokolle zur Datenübertragung handelt, d.h. die zu übertragenden Nutzdaten werden in einzelne Datenpakete aufgeteilt, wobei vor bzw. nach den Nutzdaten jeweils Spezifikations-, Prüf- oder sonstige die Kommunikation betreffende Daten plaziert sind.

Zur Kommunikation über das ISDN-Netz müssen nun die zu übertragenden Nutzdaten entsprechend dem zu verwendenden ISDN-Protokoll formatiert werden, d.h. sie müssen in die entsprechenden Datenpakete "gepackt" werden.

Üblicherweise erfolgt diese Protokollabwicklung durch einen ISDN-Adapter (Terminaladapter) bzw. die zugehörige Treibersoftware. Die Protokolle werden vom Adapter-Hersteller in den Adapter implementiert, so daß die zur Verfügung stehenden Funktionen bzw. Übertragungsstandards von den in den Adapter implementierten Protokollen bestimmt werden und davon abhängig sind. Die auf einem Computer ablaufende Anwendungssoftware, an den der Adapter angeschlossen ist, benutzt dann eine genormte Schnittstelle (z.B. den Hayes-Modem-kompatiblen AT-Befehlssatz oder die ISDN-CAPI (Common-ISDN-Application-Interface)), um diese Protokolle für den Datei- oder Faxtransfer zu verwenden.

Ein Problem besteht jedoch darin, daß die möglichen Funktionalitäten von den im Adapter implementierten Protokollen abhängen. Eine Vielzahl von ISDN-Adaptern verfügt nicht oder nur unzureichend über die von der Anwendungssoftware benötigten Protokolle. Meist ist nur ein kleiner Teil der prinzipiell möglichen Protokolle implementiert; eine Erweiterungsmöglichkeit besteht nicht, da die zur Verfügung stehenden Protokolle durch den Adapterhersteller vorgegeben werden und nicht modifiziert werden können.

Zwar stellt sich bei der Verwendung von ISDN-Karten, die in einem PC eingebaut sind, das obige Problem nicht in voller Schärfe, da die ISDN-Protokolle nicht in einem externen Gerät, sondern im PC selbst abgewickelt werden und somit diesbezüglich eine größere Flexibilität besteht. Dennoch ist auch hier eine Abwicklung bzw. eine Anbindung an die Hardware über die CAPI erforderlich. Dies bringt den Nachteil mit sich, daß oftmals die ISDN-Karte nicht in der Lage ist, bei eingehenden Anrufen das gewünschte Protokoll und die gewünschte Anwendung automatisch zu ermitteln, denn im Falle eines zu empfangenden Anrufs muß aufgrund der Spezifikationen der CAPI dieser zunächst mitgeteilt werden, welches ISDN-Protokoll verwendet werden soll.

Aus GB-A-2 302 746 und EP-A-0 503 207 ist bekannt, Daten von einem Computer über ISDN zu übertragen und zu empfangen bzw verschiedene Datengeräte und Netzwerke miteinander zu verbinden.

Es ist daher eine Aufgabe der vorliegenden Erfindung, ein Verfahren und eine Vorrichtung zur ISDN-Kommunikation zu schaffen, mit denen eine große Anzahl von ISDN-Protokollen abgewickelt werden kann.

Insbesondere ist es eine Aufgabe der vorliegenden Erfindung, die Flexibilität hinsichtlich der verwendbaren ISDN-Protokolle zu erhöhen und die Möglichkeit zu schaffen, die bisher zur Verfügung stehenden Protokolle um neue Übertragungsprotokolle zu erweitern.

Eine weitere Aufgabe der vorliegenden Erfindung besteht darin, ein Verfahren und eine Vorrichtung zur ISDN-Kommunikation zu schaffen, bei denen im Falle von eintreffenden Daten automatisch erkannt wird, welches ISDN-Protokoll zur erfolgreichen Kommunikationsabwicklung zu verwenden ist.

Ein Verfahren und eine Vorrichtung zur ISDN-Kommunikation gemäß der vorliegenden Erfindung sind in den Patentansprüchen 1, 7 und 13 beschrieben. Die übrigen Ansprüche beschreiben besondere Ausführungsbeispiele der Erfindung.

Gemäß einem Aspekt der vorliegenden Erfindung werden die mittels einer auf einem Rechner ablaufenden Software gemäß einem ISDN-Protokoll gepackten Daten unter Verwendung einer zweiten Datenverarbeitungseinrichtung, die etwa ein ISDN-Terminaladapter oder eine (passive) ISDN-Karte sein kann, unter Verwendung eines Betriebsmodus übertragen, in dem die zweite Datenverarbeitungseinrichtung zur HDLC-transparenten Übertragung der von ihr empfangenen Daten fähig ist. HDLC (HIgh level Data Link Control) ist dabei ein paketorientiertes Protokoll, auf dem die ISDN-Protokolle (X.75, usw.) aufbauen.

Die Verwendung eines HDLC-transparenten Übertragungsmodus der zweiten Datenverarbeitungseinrichtung ermöglicht es, die das ISDN-Protokoll betreffenden Vorgänge vollständig in der Anwendungs- bzw. Kommunikationssoftware ablaufen zu lassen.

Für den Terminaladapter (oder die ISDN-Karte) verbleibt lediglich die Aufgabe, die von ihm empfangenen Daten HDLC-transparent weiterzuleiten.

Bei einer weiteren Ausführungsform teilt der Rechner dem Adapter oder der CAPI-Schnittstelle der an ihn angeschlossenen ISDN-Karte mit, daß diese von nun an im HDLC-transparenten Modus arbeiten sollen. Dadurch wird zwar, etwa im Falle eines Terminaladapters, dessen Funktionalität zunächst beschränkt (er kann die von ihm prinzipiell durchführbaren ISDN-Protokolle nun nicht mehr selbst abwickeln), die Protokollabwicklung wird jedoch dadurch in die auf dem Rechner ablaufende Kommunikationssoftware verlagert. Dadurch wird letztlich aufgrund der größeren Flexibilität der Kommunikationssoftware, die so aufgebaut ist, daß sie eine Vielzahl von ISDN-Protokollen abwickeln kann, die Flexibilität des Gesamtsystems erhöht.

Bei einer bevorzugten Ausführungsform handelt es sich bei dem Transparent-Modus um den PPP (Point-to-Point protocol)-Modus. Da nahezu alle Terminaladapter sowie nahezu sämtliche passiven ISDN-Karten eine Abwicklung des PPP-Protokolls ermöglichen, wird bei diesem Ausführungsbeispiel die Möglichkeit geschaffen, mittels eines handelsüblichen Terminaladapters praktisch sämtliche ISDN-Protokolle zu verwenden, da diese nicht vom Terminaladapter selbst, sondern von der diesem vorgeschalteten Software abgewickelt werden. Das PPP-Protokoll wird dabei dazu verwendet, die vom Rechner (oder vom ISDN-Netz) empfangenen Daten HDLC-transparent weiterzuleiten.

Bei einem weiteren bevorzugten Ausführungsbeispiel werden bei eingehenden Paketen die Signaturen der möglichen ISDN-Protokolle überprüft und entsprechende Antwortpakete geschickt, bis das gewünschte Protokoll ermittelt ist. Dadurch wird die Möglichkeit geschaffen, ohne vordefinierte Voreinstellung sämtliche ISDN-Protokolle mittels eines handelsüblichen Terminaladapters zu empfangen und zu verarbeiten. Es wird dadurch überflüssig, der CAPI der ISDN-Karte mitzuteilen, welches Protokoll für einen zu empfangenden Anruf verwendet werden soll, da die Ermittlung des zu verwendenden Protokolls durch Datenaustausch zwischen der empfangenden Kommunikationssoftware und dem Absender geschieht, wobei die CAPI lediglich im HDLC-transparenten Modus arbeitet.

Die Flexibilität und Funktionalität des Gesamtsystems hängt somit lediglich von der Kommunikationssoftware ab, die die Daten mittels des HDLC-transparenten Übertragungsmodus einer an den Rechner angeschlossenen Datenverarbeitungseinrichtung empfängt bzw. sendet. Man ist jedoch bezüglich der Funktionalität oder der zu verwendenden Protokolle nicht mehr durch vorgegebene Hardwarebeschränkungen (Terminaladapter) oder Software-Standards (CAPI-Schnittstelle der ISDN-Karte) eingeschränkt.

In einem weiteren bevorzugten Ausführungsbeispiel läuft die Kommunikation zwischen dem Rechner und dem Terminaladapter asynchron, etwa über die RS-232-Schnittstelle, unter Verwendung des asynchronen PPP-Protokolls, während der Terminaladapter die empfangenen Pakete ISDN-netzseitig in synchrone umwandelt, d. h. er versendet und empfängt HDLC-transparente Pakete.

Im obigen Fall wird also auf dem eigentlich zur Kommunikation zu verwendenden ISDN-Protokoll ein zweites paketorientiertes Protokoll "aufgesetzt"; das PPP-Protokoll, das jedoch lediglich dazu dient, das eigentliche ISDN-Protokoll bzw. die gemäß diesem ISDN-Protokoll formatierten Daten transparent zu übertragen bzw. zu empfangen. Damit kann die ISDN-Protokollabwicklung auf eine höhere Ebene verlagert werden, nämlich auf die Ebene der Kommunikations- oder Anwendungssoftware. Der Terminaladapter selbst erfüllt dabei lediglich die Rolle des transparenten Weiterleitens der gemäß ISDN-Protokoll gepackten Daten.

In der nachfolgenden Beschreibung wird die vorliegende Erfindung unter Bezugnahme auf die beiliegenden Zeichnungen anhand einiger bevorzugter Ausführungsbeispiele näher beschrieben. Dabei zeigen die Figuren folgendes:
Fig. 1 zeigt schematisch die Anbindung eines PC an das ISDN-Netz mittels eines Terminaladapters.
Fig. 2 zeigt schematisch die Übertragung über das ISDN-Netz mittels eines Terminaladapters in herkömmlicher Weise.
Fig. 3 zeigt schematisch die Übertragung über das ISDN-Netz mittels eines Terminaladapters gemäß der vorliegenden Erfindung.
Fig. 4 zeigt schematisch die Anbindung eines PC an das ISDN-Netz mittels einer passiven ISDN-Karte.

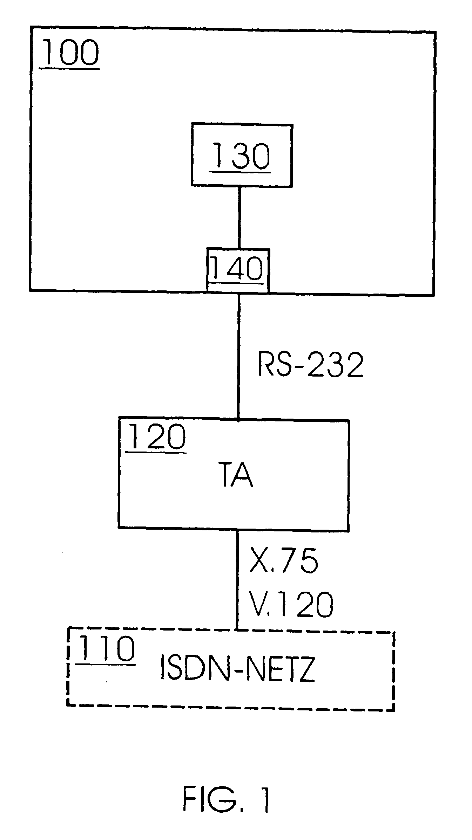

Fig. 1 zeigt schematisch die Anbindung eines Personal Computers (PC) 100 an ein ISDN-Netz 110 mittels eines Terminaladapters (TA) 120. Auf dem PC 100 läuft ein Kommunikationsprogramm 130, das mittels einer Schnittstelle 140 Daten an den Terminaladapter 120 überträgt. Dabei handelt es sich beispielsweise um eine Schnittstelle, die nur seriell asynchron Daten überträgt, z.B. eine RS 232-Schnittstelle, einen Parallel-Port, eine IRDA-Schnittstelle, eine USB-Schnittstelle mit COM-Port-Emulation usw. Die Formatierung gemäß dem verwendeten ISDN-Protokoll erfolgt in der Kommunikationssoftware. Diese formatierten Daten werden dann über die Schnittstelle 140 an den Terminaladapter 120 übertragen, beispielsweise unter Verwendung des PPP-Protokolls. Der Terminaladapter 120 verarbeitet die eintreffenden Daten dann weiter, indem er seine PPP-Funktionalität nutzt, um die ihm von der Schnittstelle 140 übermittelte Paketstruktur HDLC-transparent über das ISDN-Netz 110 zu übertragen.

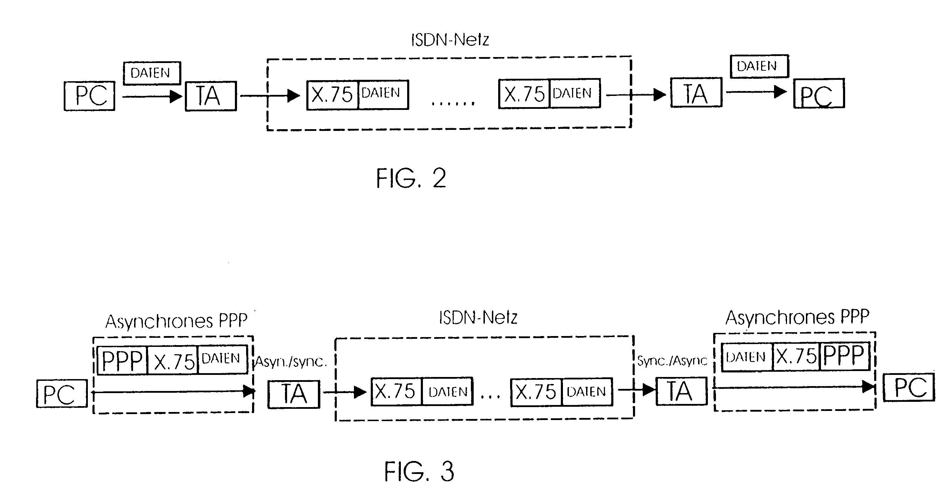

Während beim Stand der Technik, wie er schematisch in Fig. 2 dargestellt ist, die Abwicklung des ISDN-Protokolls im Terminaladapter erfolgt, kann bei dem Ausführungsbeispiel gemäß der vorliegenden Erfindung, wie es schematisch in Fig. 3 dargestellt ist, dank der Verwendung des PPP-Modus des Terminaladapters die ISDN-Protokollabwicklung in die Kommunikationssoftware des PC verlagert werden.

Beim PPP-Protokoll handelt es sich um ein serielles Übertragungsprotokoll für Punkt-zu-Punkt-Verbindungen, das beispielsweise im Internet eingesetzt wird. Fast alle auf dem Markt befindlichen ISDN-Adapter verfügen über PPP-Funktionen für den Internet- bzw. Remote-Access (RAS)-Zugang. Unter Verwendung der PPP-Funktionen werden somit HDLC (High-Level Data Link Control)-basierte ISDN-B-Kanalprotokolle in der (Kommunikations-)Software nachträglich implementiert, ohne daß der Adapter selbst vom Hersteller mit diesen Protokollen ausgerüstet wurde. Unter Verwendung der PPP-Funktionalität kann dann der Adapter auch für derartige "nachgerüstete" ISDN-Anwendungen wie Fax-Gruppe 4 und Euro-Filetransfer genutzt werden.

Es erfolgt somit also eine HDLC-transparente Übertragung der Datenpakete im ISDN-Netz. HDLC-transparent heißt dabei, daß die Struktur gemäß des HDLC-Protokolls unverändert von einem Kommunikationsendpunkt zum anderen weitergegeben wird. Die dazwischen geschaltete PPP-Stufe leitet die HDLC-Pakete "transparent", d.h. unverändert, weiter. Die Datenpakete werden unter Beibehaltung ihrer Paketstruktur von der Anwendungs- bzw. Kommunikationssoftware übernommen bzw. an diese übergeben. Im einzelnen geschieht dies bei Adaptern, die mit AT-Befehlen (Befehle eines Hayeskompatiblen Modems) gesteuert werden, üblicherweise dadurch, daß für den Datenaustausch zwischen Computer 100 und Adapter 120 ein asynchrones PPP-Protokoll verwendet wird.

Hierzu werden die Pakete mit gewissen Frame-Markern (Markierungszeichen für Paketanfang und Paketende) markiert. In den zu übertragenden Daten selbst werden diese Zeichen mittels einer Escape-Sequenz umcodiert. Zur Fehlererkennung werden die Pakete schließlich noch mit einer Prüfinformation (CRC) versehen. Fehlerhafte Pakete können dann nach erfolgter CRC-Uberprüfung sowohl vom Adapter als auch von der Anwendungssoftware verworfen werden.

Der Terminaladapter 120 wandelt schließlich die asynchronen PPP-Daten ISDN-netzseitig in synchrone um, d.h. er versendet und empfängt HDLC-transparente Pakete. Die Anwendungssoftware führt also die HDLC-basierten ISDN-Protokolle (X.75, V.120, ISO 8208, usw.) aus, indem sie die geeigneten Datenpakete sendet bzw. die empfangenen Datenpakete entsprechend auswertet.

Bei der Verarbeitung gemäß PPP-Protokoll werden jedoch nicht Datenpakete verarbeitet, die den üblichen PPP-Inhalten entsprechen, sondern Datenpakete, die auf ISDN-B-Kanalprotokollen basieren. Dadurch ist beispielsweise ein PPP-Header durch einen X.75-Header ersetzt. Manche Terminaladapter nehmen nun empfangsseitig eine Überprüfung dahingehend vor, daß die empfangenen Datenpakete auf ihre genormten PPP-Bestandteile hin überprüft werden. Schlägt eine solche Überprüfung fehl, werden die Pakete verworfen. Da gemäß der vorliegenden Erfindung jedoch keine eigentliche PPP-Kommunikation stattfindet, sondern das PPP-Protokoll lediglich als "Aufsatz" auf dem eigentlich verwendeten ISDN-Protokoll fungiert, ist die PPP-Implementation des Adapters ggf. dahingehend zu modifizieren, daß die Inhalte der (empfangenen) Datenpakete nicht auf die genormten PPP-Bestandteile hin überprüft werden, sondern transparent weitergeleitet werden. Bei handelsüblichen Terminaladaptern, die eine solche PPP-Überprüfung durchführen, ist daher eine geringfügige Modifikation erforderlich, um die PPP-Funktionalität dieser Terminaladapter für die Übertragung gemäß ISDN-Protokollen zu verwenden.

Fig. 2 zeigt schematisch das "Packen" der zu versendenden Nutzdaten in einem herkömmlichen System bestehend aus Terminaladapter (TA) und PC auf Sender- und Empfangsseite. Die vom PC an den Terminaladapter gesandten Daten werden dort basierend auf dem zu verwendenden ISDN-Protokoll (hier: X.75) versandt, empfangsseitig werden sie wiederum vom Terminaladapter unter Verwendung des entsprechenden ISDN-Protokolls entpackt und an ihre Zielbestimmung, etwa ein File bzw. eine Datei im empfangenden PC oder an einen Port einer auf diesem PC ablaufenden Software weitergeleitet.

Fig. 3 zeigt dagegen schematisch die Vorgehensweise gemäß der vorliegenden Erfindung. Die ISDN-Protokollabwicklung erfolgt im PC. Die gemäß ISDN-Protokoll formatierten Daten werden unter Verwendung des asynchronen PPP-Protokolls an den Terminaladapter (TA) weitergeleitet, wo sie unter Verwendung des HDLC-transparenten Übertrangungsmodus, den die PPP-Funktionalität des Terminaladapters bietet, von diesem in synchronne Datenpakete umgewandelt und HDLC-transparent über das Netz übertragen werden. Empfangsseitig wird wiederum lediglich eine HDLC-transparente Weiterleitung vom Terminaladapter vorgenommen, die eigentlichen ISDN-Pakete werden HDLC-transparent an das empfangende Endgerät (PC) unter Verwendung des PPP-Modus des Adapters weitergeleitet.

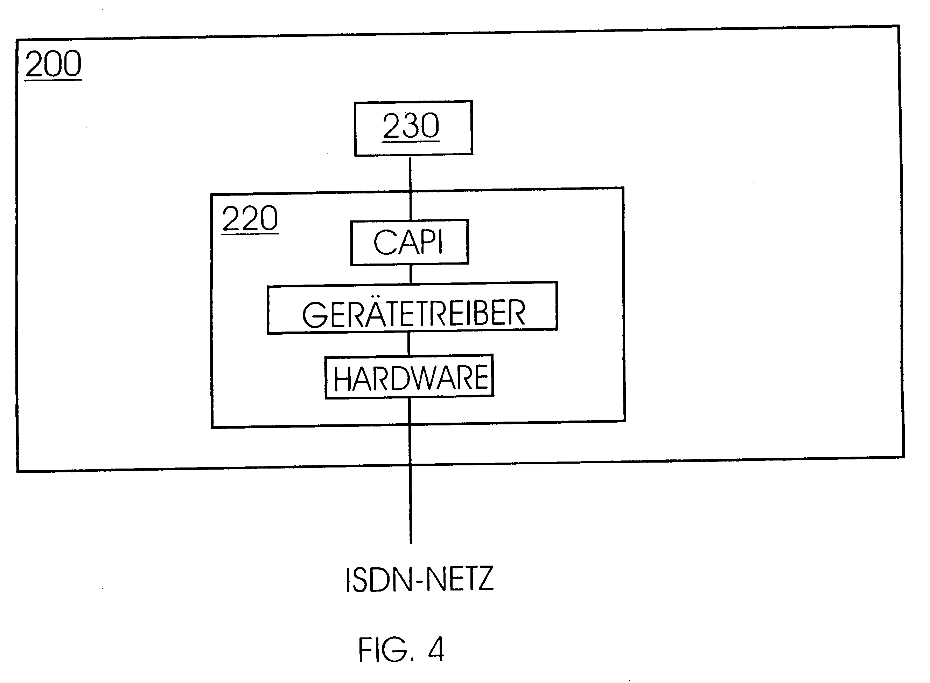

Fig. 4 zeigt ein weiteres Ausführungsbeispiel gemäß der vorliegenden Erfindung, bei dem die hardwaremäßige Implementation nicht mittels eines Terminaladapters, sondern mittels eines PC 200 und einer passiven ISDN-Karte 220 erfolgt. Üblicherweise bieten diese ISDN-Karten eine Software-Schnittstelle, die CAPI für die Kommunikation mit der darauf aufsetzenden Kommunikationssoftware oder Anwendungssoftware 230. Beim herkömmlichen Betrieb werden die zu versendenden Daten über die CAPI an die ISDN-Karte übergeben. Dort werden die entsprechenden ISDN-Protokolle abgewickelt und die Daten über das ISDN-Netz übertragen.

Im Ausführungsbeispiel gemäß Fig. 4 findet nun allerdings die ISDN-Protokollabwicklung nicht mehr nach Übergabe der zu versendenden Daten an die CAPI statt, sondern bereits vorher auf der Ebene eines Kommunikationsprogramms 230. Dieses Kommunikationsprogramm wickelt die ISDN-Protokolle ab und verwendet dann für die weitere Versendung der so gepackten Daten den Modus der HDLC-transparenten Übertragung der CAPI. Die weitere Vorgehensweise entspricht ansonsten dem Ausführungsbeispiel aus Fig. 1.

Beim Ausführungsbeispiel aus Fig. 4 wird also die ISDN-Protokollabwicklung um eine Ebene "nach oben" verlagert, d.h. auf die der Software-Schnittstelle CAPI vorgelagerte Ebene des Kommunikationsprogramms 230. Dies hat verschiedene Vorteile. Zwar entfällt bei passiven ISDN-Karten eine Beschränkung auf bestimmte Protokollimplementationen, da bei diesen ISDN-Karten die ISDN-Protokolle auf dem PC ablaufen, und somit eine hardwaremäßige Beschränkung wie im Falle des Terminaladapters in dieser Form nicht vorliegt. Allerdings besteht eine Beschränkung dahingehend, daß für die Kommunikation mit Anwendungssoftware oder einem darauf aufsetzenden Kommunikationsprogramm auf die Spezifikationen der CAPI zurückgegriffen werden muß. Soll jedoch ein eingehender Anruf ausgewertet werden, so ist es beispielsweise bei der herkömmlichen Konfiguration erforderlich, der CAPI mitzuteilen, welches Protokoll für den Empfang verwendet werden soll.

Gemäß der vorliegenden Erfindung wird jedoch die CAPI nicht dazu verwendet, auf die unterhalb ihrer Ebene ablaufenden ISDN-Protokolle zuzugreifen, sondern lediglich dazu verwendet, eine HDLC-transparente Übertragung ablaufen zu lassen. Für diese Übertragungs-Funktionalität ist es jedoch nicht erforderlich, der CAPI mitzuteilen, nach welchem Protokoll der Empfang erfolgen soll.

Die auf der CAPI aufsetzende Kommunikationssoftware empfängt nun also die durch die CAPI unter Verwendung ihres HDLC-transparenten Übertragungsmodus transparent weitergeleiteten Daten im ISDN-Format. Die Kommunikationssoftware ist dabei so aufgebaut, daß sie die eingehenden Pakete nach entsprechenden Signaturen der ISDN-Protokolle überprüft und entsprechende Antwortpakete schickt, bis das gewünschte Protokoll ermittelt ist. Dadurch, daß innerhalb der empfangenen Datenpakete die Signaturen der gewünschten Anwendung gesucht werden, ist es möglich, eine Vielzahl von ISDN-Protokollen abzuwickeln, beispielsweise Fax-G4, Euro-Filetransfer, Videotelephonie, einfache Datenübertragung etc. Hierzu werden lediglich die entprechenden Komponenten der auf der CAPI aufsetzenden Kommunikationssoftware aktiviert.

Die Erfindung gemäß des zweiten Ausführungsbeispiels ähnelt also der des ersten Ausführungsbeispiels, wobei allerdings nicht wie im ersten Ausführungsbeispiel eine prinzipiell vorhandene Beschränkung bezüglich möglicher Protokolle, sondern eine eigentlich vorhandene Multifunktionalität der passiven ISDN-Karte "künstlich" unterdrückt wird, indem die ISDN-Karte lediglich dazu verwendet wird, eine HDLC-transparente Übertragung abzuwickeln. Dadurch werden die Beschränkungen, die sich aus Verwendung der CAPI bei herkömmlicher Konfiguration ergeben, umgangen, da das auf der CAPI aufsetzende Kommunikationsprogramm ständig erweitert und den Erfordernissen angepaßt werden kann.

Ferner umgeht das zweite Ausführungsbeispiel die Notwendigkeit, beim Empfang von Daten mittels ISDN der CAPI vorher mitzuteilen, nach welchem Protokoll die eintreffenden Daten verarbeitet werden sollen.

In den beiden geschilderten Ausführungsbeispielen macht die vorliegende Erfindung davon Gebrauch, daß sowohl die handelsüblichen Terminaladapter als auch die CAPI die Funktion oder Abwicklung HDLC-transparenter Übertragung bieten. Im Falle eines Terminaladapters wird die dazu verwendete PPP-Funktionalität jedoch nicht für ihren eigentlichen Zweck, den Aufbau einer PPP-Verbindung, verwendet, sondern sie dient dazu, die ISDN-Datenpakete zu "maskieren" und HDLC-transparent über das ISDN-Netz zu übertragen. Dadurch wird es möglich, die Abwicklung der für die Kommunikation verwendeten ISDN-Protokolle auf eine höhere Ebene, nämlich die der Kommunikationssoftware, zu verlagern, wodurch sowohl Flexibilität als auch Funktionalität gegenüber dem Stand der Technik deutlich verbessert werden.

Es ist festzuhalten, daß die obigen Ausführungsbeispiele lediglich illustrativen Charakter haben. Anstelle der PPP-Funktionalität kann auch jeder andere Modus verwendet werden der zur HDLC-transparenten Übertragung geeignet ist. Daneben muß die "transparente" Übertragung nicht unbedingt HDLC-transparent erfolgen, auch andere vergleichbare paketorientierte synchrone Übertragungsstandards können für eine solche transparente Übertragung verwendet werden.

## Patentansprüche

1. Verfahren zum Übertragen und/oder Empfangen von Daten über eine ISDN-Verbindung, welches folgende Schritte umfaßt:
Senden/Empfangen der Daten durch eine Datenverarbeitungseinrichtung über einen ISDN-Terminaladapter, TA (120), mittels eines auf der Datenverarbeitungseinrichtung ablaufenden Programms, wobei
der Terminaladapter (120) während des Sendens bzw. Empfangens in einem Transparent-Modus arbeitet, in dem er die von der Datenverarbeitungseinrichtung oder dem ISDN-Netz empfangenen Daten HDLC-transparent an das ISDN-Netz (110) bzw. die Datenverarbeitungseinrichtung weiterleitet, und
die für die ISDN-Kommunikation erforderlichen ISDN-B-Kanal-Protokolle von dem auf der Datenverarbeitungseinrichtung ablaufenden Programm abgewickelt werden,
der Transparent-Modus der Point-to-Point Protocol-Modus, PPP-Modus, des Terminaladapters (120) ist, und
der Datenaustauch zwischen der Datenverarbeitungseinrichtung und dem Terminaladapter (120) über ein asynchrones PPP-Protokoll erfolgt und der Terminaladapter unter Verwendung seiner PPP-Funktionalität die von der Datenverarbeitungseinrichtung empfangenen Pakete ISDN-Netz-seitig in synchrone Datenpakete umwandelt, die HDLC-transparent übertragen werden wobei eine Überprüfung auf die genormten PPP-inhalte, PPP-Header, durch den Terminaladapter nicht stattfindet.

2. Verfahren nach Anspruch 1, das ferner folgenden Schritt umfaßt:
Versetzen des Terminaladapters in den PPP-Modus durch ein Signal von der Datenverarbeitungseinrichtung.

3. Verfahren nach einem der vorhergehenden Ansprüche, bei dem
als Terminaladapter (120) eine ISDN-Karte verwendet wird, wobei für den Modus der HDLC-transparenten Übertragung die Funktionalität der HDLC-transparenten Übertragung der CAPI, Common-ISDN-Application-Interface, verwendet wird.

4. Verfahren nach einem der vorhergehenden Ansprüche, das ferner folgende Schritte umfaßt:
Überprüfen von eingehenden Paketen auf die Signaturen der möglichen ISDN-Protokolle durch das auf der Datenverarbeitungseinrichtung ablaufende Programm, und
Verschicken entsprechender Antwortpakete, bis das gewünschte Protokoll ermittelt ist.

5. Vorrichtung zum Übertragen und/oder Empfangen von Daten über eine ISDN-Verbindung, welche umfaßt:
eine Einrichtung zum Senden/Empfangen der Daten durch eine Datenverarbeitungseinrichtung über einen ISDN-Terminaladapter (120) mittels eines auf der Datenverarbeitungseinrichtung ablaufenden Programms, derart ausgestaltet daß,
der Terminaladapter (120) während des Sendens bzw. Empfangens in einem Transparent-Modus arbeitet, in dem er die von der Datenverarbeitungseinrichtung oder dem ISDN-Netz empfangenen Daten HDLC-transparent an das ISDN-Netz (110) bzw. die Datenverarbeitungseinrichtung weiterleitet, und
die für die ISDN-Kommunikation erforderlichen ISDN-B-Kanal-Protokolle von dem auf der Datenverarbeitungseinrichtung ablaufenden Programm abgewickelt werden,
der Transparent-Modus der Point-to-Point, Protocol-Modus, PPP-Modus, des Terminaladapters ist, und
der Datenaustauch zwischen der Datenverarbeitungseinrichtung und dem Terminaladapter über ein asynchrones PPP-Protokoll erfolgt und der Terminaladapter unter Verwendung seiner PPP Funktionalität die von der Datenverarbeitungseinrichtung empfangenen Pakete ISDN-Netz-seitig in synchrone Datenpakete umwandelt, die HDLC-transparent übertragen werden, wobei eine Überprüfung auf die genormten PPP-Inhalte, PPP-Header durch den Terminaladapter nicht stattfindet.

6. Vorrichtung nach Anspruch 5, die ferner folgendes umfaßt:
eine Einrichtung zum Versetzen des Terminaladapters in den PPP-Modus durch ein Signal von der Datenverarbeitungseinrichtung.

7. Vorrichtung nach Anspruch 5 oder 6, die
als Terminaladapter (120) eine ISDN-Karte umfaßt, wobei für den Modus der HDLC-transparenten Übertragung die Funktionalität der HDLC-transparenten Übertragung der CAPI, Common-ISDN-Application-Interface verwendet wird.

8. Vorrichtung nach Anspruch 5, 6 oder 7, die ferner folgendes umfaßt:
eine Einrichtung zum Überprüfen von eingehenden Paketen auf die Signaturen der möglichen ISDN-Protokolle durch das auf der Datenverarbeitungseinrichtung ablaufende Programm, und
eine Einrichtung zum Verschicken entsprechender Antwortpakete, bis das gewünschte Protokoll ermittelt ist.

9. Computerprogrammprodukt, welches von einem Computer lesbaren Programmcode umfaßt, der den Computer zum Übertragen und/oder Empfangen von Daten über eine ISDN-Verbindung veranlaßt, wobei das Computerprogrammprodukt folgendes umfaßt:
von einem Computer lesbaren Programmcode, um den Computer in die Lage zu versetzen, ein Verfahren gemäß einem der Ansprüche 1 bis 4 auszuführen.

## Claims

1. A method for transmitting and/receiving data over an ISDN connection, comprising the following steps:
transmitting/receiving the data through a data processing means over a ISDN terminal adapter TA (120) by means of a program running on the data processing means, whereas
the terminal adapter (120) during transmission or receiving is operating in a transparent mode in which it forwards the data received from the data processing means or the ISDN network HDLC transparent to the ISDN network (110) or the data processing means, respectively, and
the ISDN-B-channel protocols necessary for the ISDN communication are executed by the program running on the data processing means, whereas
the transparent node is the point-to-point protocol mode, PPP (120) of the terminal adapter, and the data exchange between the data processing means and the terminal adapter (120) is running over an asynchronous PPP protocol and the terminal adapter using its PPP functionality converts the packets received by the data processing means on the ISDN network side into synchronous data packets which are transmitted HDLC transparently, whereas a check for the standardized PPP contents, PPP-header, is not carried out by the terminal adapter.

2. The method of claim 1, further comprising the following steps:
putting the terminal adapter into the PPP mode by a signal from the data processing means.

3. The method of one of the preceding claims, whereas
instead of a terminal adapter (120) an ISDN card is used, whereas for the mode of the HDLC transparent transmission the functionality of the HDLC transparent transmission of the CAPI, common ISDN application interface, is used.

4. The method of one of the preceding claims, further comprising the following steps:
checking incoming packets for the signatures of possible ISDN protocols through the program running on the data processing means, and
transmitting corresponding response packets until the desired protocol has been determined.

5. An apparatus for transmitting and/or receiving data over a ISDN connection, comprising:
means for transmitting/receiving the data through a data processing means over an ISDN terminal adapter (120) by means of a program running on the data processing means which is adapted such that
the terminal adapter (120) operates during transmission or reception in a transparent mode in which it forwards the data received by the data processing means or the ISDN network in a HDLC transparent manner to the ISDN network (110) or the data processing means, and
the ISDN-B-channel protocols necessary for the ISDN communication are executed by the program running on the data processing means,
the transparent mode being the point-to-point protocol mode, PPP, of the terminal adapter and the data exchange between the data processing means and the terminal adapter is running over an asynchronous PPP protocol and the terminal adapter by using its PPP functionality converts the packets received by the data processing means on the ISDN network side into synchronous data packets which are transmitted in a HDLC transparent manner, whereas
a check for the standardized PPP contents, PPP-header, by the terminal adapter is not carried out.

6. The apparatus of claim 5, further comprising:
means for putting the terminal adapter into the PPP mode by a signal from the data processing means.

7. The apparatus of claim 5 or 6, which comprises instead of the terminal adapter (120) a ISDN card, whereas for the mode of the HDLC transparent transmission the functionality of the HDLC transparent transmission of the CAPI, common ISDN-application-interface, is used.

8. The apparatus of claim 5, 6, or 7, further comprising:
means for checking incoming packets for the signatures of possible ISDN protocols by the program running on the data processing means, and
means for transmitting corresponding response packets until the desired protocol has been determined.

9. Computer program product, which comprises a computer-readable program code which causes the computer for transmitting and/or receiving data over a ISDN connection, whereas the computer program product comprises:
computer-readable program code to enable the computer to carry out a method according to one of claims 1 to 4.

## Revendications

1. Procédé pour transférer et/ou recevoir des données via une connexion ISDN, lequel comprend les étapes suivantes consistant à :
envoyer/recevoir des données par un système de traitement des données via un adaptateur de terminal ISDN, TA, (120) au moyen d'un programme exécuté sur le système de traitement des données,
l'adaptateur de terminal (120) travaillant pendant l'envoi et/ou la réception dans un mode transparent, dans lequel il réachemine de façon transparente pour l'HDLC au niveau du réseau ISDN (110) et/ou du système de traitement des données les données reçues par le système de traitement des données ou le réseau ISDN, et
les protocoles ISDN canal B requis pour la communication ISDN étant effectués par le programme exécuté sur le système de traitement des données,
le mode transparent étant le mode du protocole point-à-point PPP de l'adaptateur de terminal (120), et
l'échange de données entre le système de traitement des données et l'adaptateur de terminal (120) ayant lieu via un protocole PPP asynchrone et l'adaptateur de terminal convertissant, grâce à l'utilisation de sa fonctionnalité PPP, les paquets reçus par le système de traitement des données du côté du réseau ISDN en paquets de données synchrones, qui sont transférés de façon transparente pour l'HDLC, sachant qu'aucun contrôle sur les contenus PPP normalisés, les en-têtes PPP, n'est effectué par l'adaptateur de terminal.

2. Procédé selon la revendication 1, qui comprend en outre l'étape suivante consistant à :
déplacer l'adaptateur de terminal dans le mode PPP par un signal provenant du système de traitement des données.

3. Procédé selon l'une quelconque des revendications précédentes, pour lequel
une carte ISDN est utilisée comme adaptateur de terminal (120), la fonctionnalité du transfert transparent de l'HDLC du CAPI, Common ISDN Application Interface, étant utilisée pour le mode de transfert transparent de l'HDLC.

4. Procédé selon l'une quelconque des revendications précédentes, qui comprend en outre les étapes suivantes consistant à :
contrôler les paquets entrants au niveau des signatures des protocoles ISDN possibles par le programme exécuté sur le système de traitement des données,
envoyer les paquets de réponses correspondants jusqu'à ce que le protocole souhaité soit déterminé.

5. Dispositif pour transférer et/ou recevoir des données via une connexion ISDN, lequel comprend :
un système pour envoyer/recevoir les données par un système de traitement des données via un adaptateur de terminal ISDN (120) au moyen d'un programme exécuté sur le système de traitement des données, équipé de sorte
que l'adaptateur de terminal (120) travaille pendant l'envoi et/ou la réception dans un mode transparent, dans lequel il réachemine de façon transparente pour l'HDLC au niveau du réseau ISDN (110) et/ou du système de traitement des données les données reçues par le système de traitement des données ou le réseau ISDN, et
que les protocoles ISDN canal B requis pour la communication ISDN soient effectués par le programme exécuté sur le système de traitement des données,
que le mode transparent soit le mode du protocole point-à-point PPP de l'adaptateur de terminal, et
que l'échange de données entre le système de traitement des données et l'adaptateur de terminal ait lieu via un protocole PPP asynchrone, et que l'adaptateur de terminal convertisse, grâce à l'utilisation de sa fonctionnalité PPP, les paquets reçus par le système de traitement des données du côté du réseau ISDN en paquets de données synchrones, qui sont transférés de façon transparente pour l'HDLC, sachant qu'aucun contrôle sur les contenus PPP normalisés, les en-têtes PPP, n'est effectué par l'adaptateur de terminal.

6. Dispositif selon la revendication 5, qui comprend en outre l'élément suivant :
un dispositif pour déplacer l'adaptateur de terminal dans le mode PPP par un signal provenant du système de traitement des données.

7. Dispositif selon la revendication 5 ou 6, qui comprend une carte ISDN comme adaptateur de terminal (120), la fonctionnalité du transfert transparent de l'HDLC du CAPI, Common ISDN Application Interface, étant utilisée pour le mode de transfert transparent de l'HDLC.

8. Dispositif selon la revendication 5, 6 ou 7, qui comprend en outre les éléments suivants :
un dispositif pour contrôler les paquets entrants au niveau des signatures des protocoles ISDN possibles par le programme exécuté sur le système de traitement des données, et
un dispositif pour envoyer les paquets de réponses correspondants jusqu'à ce que le protocole souhaité soit déterminé.

9. Produit de programme informatique, lequel comprend un code programme pouvant être lu par un ordinateur, lequel code autorise l'ordinateur à transférer et/ou recevoir des données via une connexion ISDN, le produit de programme informatique comprenant l'élément suivant :
un code programme pouvant être lu par un ordinateur, pour placer l'ordinateur en position d'exécuter un procédé selon l'une quelconque des revendications 1 à 4.
